(19) Europäisches Patentamt
European Patent Office
Office européen des brevets

(11) EP 2 177 548 A1

(12) EUROPEAN PATENT APPLICATION

(43) Date of publication:
21.04.2010 Bulletin 2010/16

(51) Int Cl.:
*C08F 210/02* (2006.01) *C08J 5/18* (2006.01)

(21) Application number: 08166574.7

(22) Date of filing: 14.10.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: **Ineos Europe Limited**
**Lyndhurst, Hampshire SO43 7FG (GB)**

(72) Inventor: **The designation of the inventor has not yet been filed**

(74) Representative: **King, Alex**
**Compass Patents LLP**
**120 Bridge Road**
**Chertsey**
**Surrey KT16 8LA (GB)**

(54) **Copolymers and films thereof**

(57) Copolymers of ethylene and α-olefins, having
(a) a density in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g, a tear strength (TD) of ≥ 470 g, and a dart impact of ≥ 1800 g of a blown film having a thickness of 25mm produced from the copolymer; where MD is referred to the machine direction and TD is the transverse direction of the blown film
are suitably prepared in the gas phase by use of a supported metallocene catalyst system. Particularly suitable are copolymers of ethylene and 1-octene and the resultant blown films show improved processsability and exhibit an improved balance of film properties of dart impact and tear strength.

EP 2 177 548 A1

## Description

The present invention relates to novel copolymers and in particular to novel copolymers of ethylene and alpha-olefins in particular to copolymers of ethylene and 1-octene and also to films produced from said copolymers.

In recent years there have been many advances in the production of polyolefin copolymers due to the introduction of metallocene catalysts. Metallocene catalysts offer the advantage of generally higher activity than traditional Ziegler catalysts and are usually described as catalysts which are single-site in nature. Because of their single-site nature the polyolefin copolymers produced by metallocene catalysts often are quite uniform in their molecular structure. For example, in comparison to traditional Ziegler produced materials, they have relatively narrow molecular weight distributions (MWD) and narrow Short Chain Branching Distribution (SCBD).

Although certain properties ofmetallocene products are enhanced by narrow MWD, difficulties are often encountered in the processing of these materials into useful articles and films relative to Ziegler produced materials. In addition, the uniform nature of the SCBD of metallocene produced materials does not readily permit certain structures to be obtained.

Recently a number of patents have published directed to the preparation of films based on low density polyethylenes prepared using metallocene catalyst compositions.

EP 608369 describes copolymers having a melt flow ratio ($I_{10}/I_2$) of ≥ 5.63 and a molecular weight distribution (MWD) satisfying the relationship MWD ≤(I10/$I_2$) - 4.63. The copolymers are described as elastic substantially linear olefin polymers having improved processability and having between 0.01 to 3 long chain branches per 1000 C atoms and show the unique characteristic wherein the $I_{10}/I_2$ is essentially independent of MWD.

WO 94/14855 discloses linear low density polyethylene (LLDPE) films prepared using a metallocene, alumoxane and a carrier. The metallocene component is typically a bis (cyclopentadienyl) zirconium complex exemplified by bis (n-butylcyclopentadienyl) zirconium dichloride and is used together with methyl alumoxane supported on silica. The LLDPE's are described in the patent as having a narrow Mw/Mn of 2.5-3.0, a melt flow ratio (MFR) of 15-25 and low zirconium residues.

WO 94/26816 also discloses films prepared from ethylene copolymers having a narrow composition distribution. The copolymers are also prepared from traditional metallocenes (eg bis (1-methyl, 3-n-butylcyclopentadienyl) zirconium dichloride and methylalumoxane deposited on silica) and are also characterised in the patent as having a narrow Mw/Mn values typically in the range 3-4 and in addition by a value of Mz/Mw of less than 2.0.

However, it is recognised that the polymers produced from these types of catalyst system have deficiencies in processability due to their narrow Mw/Mn. Various approaches have been proposed in order to overcome this deficiency. An effective method to regain processability in polymers of narrow Mw/Mn is by the use of certain catalysts which have the ability to incorporate long chain branching (LCB) into the polymer molecular structure. Such catalysts have been well described in the literature, illustrative examples being given in WO 93/08221 and EP-A-675421.

WO 97/44371 discloses polymers and films where long chain branching is present and the products have a particularly advantageous placement of the comonomer within the polymer structure. Polymers are exemplified having both narrow and broad Mw/Mn, for example from 2.19 up to 6.0, and activation energy of flow, which is an indicator of LCB, from 7.39 to 19.2 kcal/mol (31.1 to 80.8kJ/mol). However, there are no examples of polymers of narrow Mw/Mn, for example less than 3.4, which also have a low or moderate amount of LCB, as indicated by an activation energy of flow less than 11.1kcal/mol (46.7kJ/mol).

WO 00/68285 exemplified copolymers of ethylene and alpha-olefins having molecular weight distributions in the range 2.3 to 3.2, melt index of 1.02 - 1.57 and activation energies of about 32 kJ/mol. The copolymers were most suitable for use in the application of films showing good processability, improved optical and mechanical properties and good heat sealing properties. The copolymers were suitably prepared in the gas phase by use of monocyclopentadienyl metallocene complexes.

EP 1360213 describes metallocene film resins having good mechanical properties, excellent optical properties and very good extrusion potential. The resins exhibit melt indices $MI_2$ the range 0.001 to 150 g/10 min and a high Dow Rhelogy Index (DRI) of at least 20/$MI_2$. The resins are suitably prepared from ethylene bis(4,5,6,7-tetrahydro-1-indenyl) zirconium dichloride/MAO catalyst systems.

EP 1250540 and EP 1225201 similarly disclose polymers having DRI of at least 8/$MI_2$ and 5/$MI_2$ respectively.

US 5674342 describes ethylene polymers having a DRI of at least 0.1 and preferably at least 0.3 and a melt flow ratio ($I_{10}/I_2$) in the range 8 to about 12. Specifically exemplified polymers exhibit DRI in the range 0.3 - 0.7 and molecular weight distributions (Mw/Mn) in the range 2.15 - 3.4.

WO 04/000919 describes films from LLDPE having a ratio of MD tear to TD tear of ≥ 0.9. The films are based on copolymers produced from hafnium metallocene catalysts systems, the reported films however have dart impact of ≤ 690 g (1013 g/mil).

WO 06/085051 describes copolymers of ethylene and alpha-olefins having broader molecular weight distributions (Mw/Mn) in the range 3.5 to 4.5. These copolymers exhibited a melt elastic modulus G' (G"= 500 Pa) in the range

40 to 150 Pa and an activation energy of flow (Ea) in the range 28 - 45 kJ/mol but which had low or moderate amounts of LCB.

WO 08/074689 describes copolymers of ethylene and alpha-olefins having a much lower Dow Rheology Index (DRI) but with a more balanced processability with improved properties particularly those suitable for preparing films with an excellent balance of processing, optical and mechanical properties.

The copolymers described and exemplified in these prior art publications have typically been copolymers of ethylene and α-olefins having C4 - C6 carbon atoms for example 1-butene, 1-hexene and 4-methyl-1 pentane.

We have now surprisingly found that copolymers comprising ethylene and α-olefins, in particular higher α-olefins, show improved processability having properties particularly suitable for preparing films with an excellent balance of processing, optical and mechanical properties. In particular blown films exhibit an excellent combination of MD tear strength, TD tear strength and dart impact.

Thus according to a first aspect of the present invention there is provided a copolymer of ethylene and an α-olefin, said copolymer having

(a) a density in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g, a tear strength (TD) of ≥ 470 g, and a dart impact of ≥ 1800 g of a blown film having a thickness of 25mm produced from the copolymer; where MD is referred to the machine direction and TD is the transverse direction of the blown film.

Preferred α-olefins are those having C4 - C12 carbon atoms. Most preferred α-olefins are 1-butene, 1-hexene, 4-methyl-1-pentene and 1-octene. A particularly preferred α-olefin is 1-octene.

Thus according to a preferred aspect of the present invention there is provided a copolymer of ethylene and 1-octene having

(a) a density in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g, a tear strength (TD) of ≥ 470 g, and a dart impact of ≥ 1800 g of a blown film having a thickness of 25mm produced from the copolymer; where MD is referred to the machine direction and TD is the transverse direction of the blown film.

The copolymers preferably have a density in the range 0.910 - 0.935 g/cm$^3$.

The copolymers preferably have a melt index in the range 0.05 - 20 g/10 min and most preferably in the range 0.5 - 5 g/10 min.

The copolymers preferably have a melt elastic modulus G' (G" = 500Pa) in the range 35 - 80 Pa. and most preferably in the range 35 - 45 Pa.

The copolymers preferably have an activation energy of flow (Ea) in the range 28 - 45 kJ/mol.

The copolymers typically have a molecular weight distribution in the range 2.5 - 4.5 and preferably in the range 3.0 - 4.0.

The novel copolymers of the present invention may suitably be prepared by use of a metallocene catalyst system comprising, preferably a monocylcopentadienyl metallocene complex having a 'constrained geometry' configuration together with a suitable activator.

Examples of monocyclopentadienyl or substituted monocyclopentadienyl complexes suitable for use in the present invention are described in EP 416815, EP 418044, EP 420436 and EP 551277.

Suitable complexes may be represented by the general formula:

$$CpMX_n$$

wherein Cp is a single cyclopentadienyl or substituted cyclopentadienyl group optionally covalently bonded to M through a substituent, M is a Group VIA metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Preferred monocyclopentadienyl complexes have the formula:

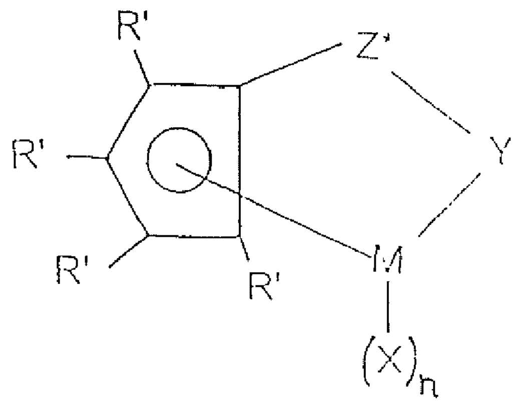

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is $SiR^*_2$, $CR^*_2$, $SiR^*_2SIR^*_2$, $CR^*_2CR^*_2$, $CR^*=CR^*$, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system,
and n is 1 or 2 depending on the valence of M.

Examples of suitable monocyclopentadienyl complexes are (tert-butylamido) dimethyl (tetramethyl-$\eta^5$- cyclopentadienyl) silanetitanium dichloride and (2-methoxyphenylamido) dimethyl (tetramethyl--$\eta^5$- cyclopentadienyl) silanetitanium dichloride.

Particularly preferred metallocene complexes for use in the preparation of the copolymers of the present invention may be represented by the general formula:

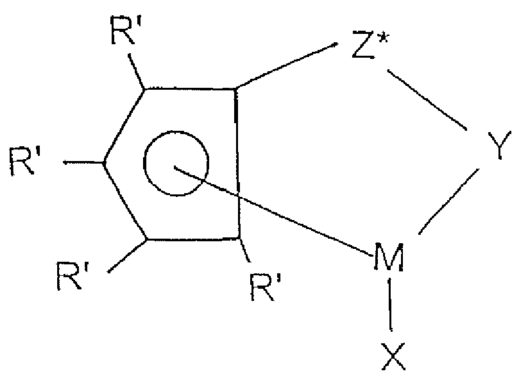

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $Air^*_2$, $CR^*_2$, $SiR^*_2SIR^*_2$, $CR^*_2CR^*_2$, CR*=CR*, $CR^*_2SiR^*_2$, or
$GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

Examples of suitable X groups include s-trans-$\eta^4$-1,4-diphenyl-1,3-butadiene, s-trans-$\eta^4$-3-methyl-1,3-pentadiene; s-trans-$\eta^4$-2,4-hexadiene; s-trans-$\eta^4$-1,3-pentadiene; s-trans-$\eta^4$1,4-ditolyl-1,3-b-utadiene; s-trans-$\eta^4$-1,4-bis(trimethylsilyl)-1,3-butadiene; s-cis-$\eta^4$-3-methyl-1,3-pentadiene; s-cis-$\eta^4$-1,4-dibenzyl-1,3-butadiene; s-cis-$\eta^4$-1,3-pentadiene; s-cis-$\eta^4$-1,4-bis(trimethylsilyl)-1,3-butadiene, said s-cis diene group forming a $\pi$-complex as defined herein with the metal.

Most preferably R' is hydrogen, methyl, ethyl, propyl, butyl, pentyl, hexyl, benzyl, or phenyl or 2 R' groups (except hydrogen) are linked together, the entire $C_5R'_4$ group thereby being, for example, an indenyl, tetralhydroindenyl, fluorenyl, terahydrofluorenyl, or octahydrofluorenyl group.

Highly preferred Y groups are nitrogen or phosphorus containing groups containing a group corresponding to the formula -N(R")- or -P(R")- wherein R" is $C_{1-10}$ hydrocarbyl.

Most preferred complexes are amidosilane - or amidoalkanediyl complexes.

Most preferred complexes are those wherein M is titanium.

Specific complexes are those disclosed in WO 95/00526 and are incorporated herein by reference.

A particularly preferred complex is (t-butylamido) (tetramethyl-$\eta^5$-cyclopentadienyl) dimethyl silanetitanium -$\eta^4$-1.3 -pentadiene.

Suitable cocatalysts for use in the preparation of the novel copolymers of the present invention are those typically used with the aforementioned metallocene complexes.

These include aluminoxanes such as methyl aluminoxane (MAO), boranes such as tris(pentafluorophenyl) borane and borates.

Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon.

A preferred aluminoxane is methyl aluminoxane (MAO).

Other suitable cocatalysts are organoboron compounds in particular triarylboron compounds. A particularly preferred triarylboron compound is tris(pentafluorophenyl) borane.

Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

$$L^*-H)^+_d \ (A^{d-})$$

wherein:-

L* is a neutral Lewis base
$(L^*-H)^+_d$ is a Bronsted acid
$A^{d-}$ is a non-coordinating compatible anion having a charge of $d^-$, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:

triethylammonium tetraphenylborate
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst, a preferred compound is the reaction product of an alkylammonium tris (pentaflurophenyl)-4-(hydroxyphenyl) borate and an organometallic compound, for example triethylaluminium or an aluminoxane such as tetraisobutylaluminoxane.

The catalysts used to prepare the novel copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica. Suitable silicas include Ineos ES70 and Grace Davison 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Particularly suitable catalysts for use in the preparation of the copolymers of the present invention are metallocene complexes which have been treated with polymerisable monomers. Our earlier applications WO 04/020487 and

WO 05/019275 describe supported catalyst compositions wherein a polymerisable monomer is used in the catalyst preparation.

Polymerisable monomers suitable for use in this aspect of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene.

Alternatively a combination of one or more monomers may be used for example ethylene and 1-hexene.

The preferred polymerisable monomer is 1-hexene.

The polymerisable monomer is suitably used in liquid form or alternatively may be used in a suitable solvent. Suitable solvents include for example heptane.

The polymerisable monomer may be added to the cocatalyst before addition of the metallocene complex or alternatively the complex may be pretreated with the polymerisable monomer.

The novel copolymers of the present invention may suitably be prepared in processes performed in either the slurry or the gas phase.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

The novel copolymers are most suitably prepared in a gas phase process.

Gas phase processes for the polymerisation of olefins, especially for the homopolymerisation and the copolymerisation of ethylene and α-olefins for example 1-butene, 1-hexene, 4-methyl-1-pentene are well known in the art.

Typical operating conditions for the gas phase are from 20°C to 100°C and most preferably from 40°C to 85°C with pressures from subatmospheric to 100 bar.

Preferred gas phase processes are those operating in a fluidised bed. Particularly preferred gas phase processes are those operating in "condensed mode" as described in EP 89691 and EP 699213 the latter being a particularly preferred process.

By "condensed mode" is meant the "process of purposefully introducing a recycle stream having a liquid and a gas phase into a reactor such that the weight percent of liquid based on the total weight of the recycle stream is typically greater than about 2.0 weight percent".

The novel copolymers of the present invention may be suitably prepared by the copolymerisation of ethylene with α-olefins having C4 - C12 carbon atoms.

The most preferred α-olefin is 1-octene.

Thus according to another preferred aspect of the present invention there is provided a method for the preparation of copolymers of ethylene and 1-octene having

(a) a density in the range 0.900 - 0.940 g/cm$^3$,
(b) a melt index $MI_2$ (2.16 kg, 190°C) in the range of 0.01 - 50 g/10 min, and
(c) a melt elastic modulus G' (G"= 500 Pa) in the range 20 to 150 Pa

said method comprising copolymerising ethylene and 1-octene in the presence of a catalyst system as hereinbefore described.

The copolymers are particularly suitable for the production of films and sheets prepared using traditional methods well known in the art. Examples of such methods are film blowing, film casting and orientation of the partially crystallised product. The films exhibit good processability, improved optical and mechanical properties and good heat sealing properties.

The films typically exhibit a tear strength (MD) of ≥ 220g and preferably ≥ 240g and a tear strength (TD) ≥ 470g and preferably ≥ 475g; where MD is referred to the machine direction and TD is the transverse direction of the blown film.

The films typically exhibit a dart impact (25 μm film) ≥ 1800g, and preferably ≥ 2000g.

The films typically exhibit a 1% secant modulus (MD) of ≥ 200 MPa and a 1% secant modulus (TD) of ≥ 170 MPa; where MD is referred to the machine direction and TD is the transverse direction of the blown film.

The films may be suitable for a number of applications for example industrial, retail, food packaging, non-food packaging and medical applications. Examples include films for bags, garment bags, grocery sacks, merchandise bags, self-serve bags, grocery wet pack, food wrap, pallet stretch wrap, bundling and overwrap, industrial liners, refuse sacks, heavy duty bags, agricultural films, daiper liners, etc.

The films may be utilised as shrink film, cling film, stretch film, sealing film or other suitable type of film.

The novel copolymers of the present invention are particularly suitable for use in the manufacture of blown films.

Thus according to another aspect of the present invention there is provided a film comprising a copolymer of

ethylene and α-olefin having

(a) a density in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g, a tear strength (TD) of ≥ 470 g, and a dart impact of ≥ 1800 g of a blown film having a thickness of 25mm produced from the copolymer; where MD is referred to the machine direction and TD is the transverse direction of the blown film.

The present invention will now be further illustrated with reference to the following

examples:

Example 1

A supported catalyst was prepared according to the general procedure described in the aforementioned WO 06/085051 and WO 08/074689. The catalyst comprised the following components:

support material - silica D984 (Grace-Davison)
metallocene - $(C_5Me_4SiMe_2N^tBu)Ti(h^4$-1,3-pentadiene)premixed with 1-hexene
activator - $[N(H)Me(C_{18-22}H_{37-45})_2][B(C_6F_5)_3(P\text{-}OHC_6H_4)]$

Details of the final catalyst compositions were as follows:

| Parameter | Catalyst |
|---|---|
| | |
| Ti loading (mmol/g) | 48.2 |
| B:Ti ratio | 1.07 |
| A1:B (TEA:activator) | 1.00 |
| hexene:Ti ratio | 35 |
| Stadis content (ppm) | 500 |

Polymerization

Polymerization of ethylene and 1-octene was carried out continuously using a fluidized bed gas phase reactor of 0.74 m diameter with a vertical section of 7 m. Polymerisation conditions are shown below in Table 1:

TABLE 1

| Condition | |
|---|---|
| | |
| Reaction Temperature (°C) | 76 |
| Reaction pressure (bar) | 20 |
| C2 partial pressure (bar) | 11.2 |
| H2 partial pressure (bar) | 0.034 |
| C8 partial pressure (bar) | 0.027 |
| C5 partial pressure (bar) | 2.51 |
| Residence time (his) | 2.9 |
| Condensation rate wt (%) | 2.7 |

**Product Characteristics**

The product characteristics are shown below in Table 2.

TABLE 2

| Property | Example 1 |
|---|---|
| | |
| Non - annealed Density ($kg/m^3$) | 918.6 |
| $MI_2$ (2.16 kg/190°C) | 1.13 |
| Melt elastic modulus G'(G"= 500Pa) Pa | 39.9 |
| Activation energy of flow Ea (kJ/mol) | 34.1 |

**Methods of test**

**Melt index** (190/2.16) was measured according to ISO 1133.
**Density** (non-annealed) was measured using a density column according to ISO 1872/1 method except that the melt index extrudates were conditioned on a plastic plaque for 30 minutes at 23°C before immersion in the density gradient columns. 2 samples were taken, and put in the density gradient column. The density value of the sample that sunk deeper was taken after 20 minutes.

**Flow Activation Energy (Ea) Measurement**

The bulk dynamic rheological properties (e.g., G', G" and η*) of all the polymers were then measured at 170°, 190° and 210°C. At each temperature, scans were performed as a function of angular shear frequency (from 100 to 0.01 rad/s) at a constant shear strain appropriately determined by the above procedure.
The dynamic rheological data was then analysed using the Rheometrics Software. The following conditions were selected for the time-temperature (t-T) superposition and the determination of the flow activation energies ($\mathbf{E}_a$) according to an Arrhenius equation, $\mathbf{a}_T = \exp(\mathbf{E}_a/kT)$, which relates the shift factor ($\mathbf{a}_T$) to $\mathbf{E}_a$:

Rheological Parameters: G'(ω), G"(ω) & η*(ω)
Reference Temperature: 190°C
Shift Mode: 2D (i.e., horizontal & vertical shifts)
Shift Accuracy: High
Interpolation Mode: Spline

**Gel Permeation Chromatography Analysis for Molecular Weight Distribution determination**

Apparent molecular weight distribution and associated averages, uncorrected for long chain branching, were determined by Gel Permeation Chromatography using a GPCV 2000 from Waters. Acquisition is done using Alliance software from the same supplier.
The apparatus settings were the following:

Column temperature: 150°C
Injector temperature: 150°C
Pump temperature: 50°C
Injection volume: 217,5 μl
Elution time: 60 min
Eluant: 1,2,4 Trichlorobenzene stabilised with 0.05% BHT
Flow rate: 1 ml/min
Columns set: 2 Shodex AT806MS + 1 Waters HT2 with a plate count (at half height) of typically 26,000
Detector: differential refractometer

Prior the elution, the polyethylene samples were dissolved at 150°C for 2 hours with stirring in 1,2,4 Trichlorobenzene stabilised with 0.05% BHT. The polyethylene concentration is 0.1% w/w.

A relative calibration was constructed using narrow polystyrene standards. The molecular weight and the solution concentrations are listed in the below table.

| PS Standard (Vial number) | Molecular weight (PS) | Polydispersity (PD) | Mass (mg) for 30 ml of solvent |
|---|---|---|---|
| **1** | 76600 | 1.03 | 34.125 |
| **2** | 3900000<br>50400 | 1.05<br>1.03 | 6.75<br>42.75 |
| **3** | 1950000<br>30300 | 1.04<br>1.02 | 8.625<br>42.75 |
| **4** | 995000<br>21000 | 1.04<br>1.02 | 8.625<br>42.75 |
| **5** | 488400<br>9860 | 1.05<br>1.02 | 17.25<br>51.375 |
| **6** | 195000<br>2100 | 1.02<br>1.05 | 25.5<br>68.25 |

The elution volume, V, was recorded for each PS standards.
The PS molecular weight was converted in PE equivalent using the following Mark Houwink constants:

$$\alpha_{PS} = 0.67 \qquad K_{PS} = 0.000175$$

$$\alpha_{PE} = 0.706 \qquad K_{PE} = 0.00051$$

The calibration curve Mw $_{PE}$ = f(V) was then fitted with a 3$^{rd}$ polynomial equation. All the calculations are done with Millennium 32 software from Waters.
This calibration has been checked against the NIST certified polyethylene BRPE0 the values obtained being 53,000 for Mw and 19,000 for Mn.

**Dynamic rheological measurements** are carried out, according to ASTM D 4440, on a dynamic rheometer (e.g., ARES) with 25 mm diameter parallel plates in a dynamic mode under an inert atmosphere. For all experiments, the rheometer has been thermally stable at 190°C for at least 30 minutes before inserting the appropriately stabilised (with antioxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.

Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 rad/s. This is to ensure that the selected applied strain is well within the linear viscoelastic region of the polymer so that the oscillatory rheological measurements do not induce structural changes to the polymer during testing. In addition, a time sweep (TS) experiment is carried out with a low applied frequency of 0.1 rad/s at the selected strain (as determined by the SS experiments) to check the stability of the sample during testing.

**Measurement of Melt Elastic Modulus G'(G"=500 Pa at 190°C:**

The frequency sweep (FS) experiment is then carried out at 190°C using the above appropriately selected strain level and the dynamic rheological data thus measured are then analysed using the rheometer software (viz., Rheometrics RHIOS V4.4 or Orchestrator Software) to determine the melt elastic modulus G'(G" = 500 Pa) at a constant,

reference value (500 Pa) of melt viscous modulus (G").

Film Characteristics

Blown films of 25 μm thickness were prepared from the copolymer prepared in Example 1. The details of extrusion conditions and the mechanical and optical properties of the films are given below in Table 3. Comparative films based on examples 5 and 6 of WO 08/074689 are shown in the Table 4 as CE1 and CE2 respectively.

TABLE 3

| Copolymer | | Example 1 |
|---|---|---|
| Non - annealed density (pellets) kg/cm$^3$ | | 918.6 |
| MI (2.16) g/10min (pellets) | | 1.13 |
| Mechanical properties | | |
| Dart impact (dart head) g | | 2075 |
| Elmendorf tear strength (g/25μm) | MD | 243 |
| | TD | 485 |
| Tensile stress at yield (MPa) | MD | 10.8 |
| | TD | 10.9 |
| Tensile stress at break (MPa) | MD | 65.7 |
| | TD | 66.8 |
| Elongation at break (%) (MPa) | MD | 570 |
| | TD | 678 |
| Secant modulus 1% (MPa) | MD | 210 |
| | TD | 178 |
| Optical properties | | |
| Haze (%) | | 11.3 |
| Gloss 45° (‰) | | 51.5 |

TABLE4

| Copolymer | | CE 1 | CE 2 |
|---|---|---|---|
| Annealed density (pellets) kg/cm$^3$ | | 921.3 | 919.9 |
| MI (2.16) g/10min (pellets) | | 1.43 | 1.24 |
| Extrusion parameters | | | |
| Melt pressure (bar) | | 163 | 184 |
| Melt temperature (°C) | | 216 | 216 |
| Motor load (A) | | 70 | 76 |
| Screw speed (rpm) | | 54 | 54 |
| Air temperature (°C) | | 18 | 18 |
| Specific output (calculated from Output/Motor load (kg/h/A)) | | 0.71 | 0.66 |
| Mechanical properties | | | |
| Dart impact (dart head) g | | 1550 | 1707 |
| Elmendorf tear strength (g/25μm) | MD | 235 | 216 |
| | TD | 470 | 445 |
| Tensile stress at yield (MPa) | MD | 10.9 | 9.6 |
| | TD | 10.3 | 9.7 |

(continued)

| | | | |
|---|---|---|---|
| Mechanical properties | | | |
| Tensile stress at break (MPa) | MD | 64.9 | 66.0 |
| | TD | 60.8 | 60.5 |
| Elongation at break (%) (MPa) | MD | 588 | 566 |
| | TD | 697 | 669 |
| Secant modulus 1% (MPa) | MD | 164 | 155 |
| | TD | 168 | 166 |
| Optical properties | | | |
| Haze (%) | | 8.8 | 6.0 |
| Gloss 45°(°/)$_{oo}$ | | 62 | 69 |

**Extruder & extrusion characteristics**

Extruder:

| | |
|---|---|
| CMG (Costruzione Meccaniche Gallia) 1200 TSA | |
| Screw diameter | 55mm |
| Screw L/D ratio | 30 |
| Die diameter/gap | 150/2.2 mm |
| Screen pack | flat |

Extrusion:

| | |
|---|---|
| Temperature profile: | |
| Screw | 200/210/210/210/210°C |
| Die | 210/210/220/225°C |
| Output | 50kg/h |
| Take-off speed | 30m/min |
| Blow-up ratio | 2.5:1 |
| Frostline height | 430mm |
| Film thickness | 25μm |

**Dart impact** was measured by ASTM D1709-85 (Method A), haze by ASTM D1003, **gloss (45°)** by ASTM D2457, **tear strength** (Elmendorf) by ASTM 1922, **tensile properties** and **secant modulus** (1%) according to ISO 1184 .

**Claims**

**1.** A copolymer of ethylene and an α-olefin, said copolymer having

(a) a density in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g, a tear strength (TD) of ≥ 470 g, and a dart impact of ≥ 1800 g of a blown film having a thickness of 25mm produced from the copolymer; where MD is referred to the machine direction and TD is the transverse direction of the blown film.

Europäisches Patentamt
European Patent Office
Office européen des brevets

# EUROPEAN SEARCH REPORT

Application Number
EP 08 16 6574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | EP 1 935 909 A (INEOS EUROPE LTD [GB]) 25 June 2008 (2008-06-25) * page 12 - page 13; examples 5,6; table 3 * * claim 1 * ----- | 1 | INV. C08F210/02 C08J5/18 |
| D,Y | WO 2006/085051 A (INEOS EUROPE LTD [GB]; CHAI CHOON KOOI [BE]) 17 August 2006 (2006-08-17) * claims 1,4,15,17 * * page 19; examples 2,3; table 2 * * page 15; examples 1,2; table 1 * ----- | 1 | |
| D,A | WO 94/14855 A (MOBIL OIL CORP [US]) 7 July 1994 (1994-07-07) * page 2, line 21 - page 4, line 13 * ----- | 1 | |

TECHNICAL FIELDS SEARCHED (IPC)
C08F
C08J

The present search report has been drawn up for all claims

1

| Place of search | Date of completion of the search | Examiner |
|---|---|---|
| Munich | 2 March 2009 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 16 6574

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2009

| Patent document cited in search report | Publication date | Patent family member(s) | Publication date |
|---|---|---|---|
| EP 1935909 A | 25-06-2008 | WO 2008074689 A1 | 26-06-2008 |
| WO 2006085051 A | 17-08-2006 | CN 101155841 A | 02-04-2008 |
| | | JP 2008530297 T | 07-08-2008 |
| | | US 2008249262 A1 | 09-10-2008 |
| WO 9414855 A | 07-07-1994 | AU 673048 B2 | 24-10-1996 |
| | | AU 5871594 A | 19-07-1994 |
| | | CA 2152937 A1 | 07-07-1994 |
| | | EP 0675906 A1 | 11-10-1995 |
| | | JP 8505174 T | 04-06-1996 |
| | | SG 46293 A1 | 20-02-1998 |
| | | US 5608019 A | 04-03-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 608369 A
- WO 9414855 A
- WO 9426816 A
- WO 9308221 A
- EP 675421 A
- WO 9744371 A
- WO 0068285 A
- EP 1360213 A
- EP 1250540 A
- EP 1225201 A
- US 5674342 A
- WO 04000919 A
- WO 06085051 A
- WO 08074689 A
- EP 416815 A
- EP 418044 A
- EP 420436 A
- EP 551277 A
- WO 9500526 A
- WO 9827119 A
- WO 04020487 A
- WO 05019275 A
- EP 89691 A
- EP 699213 A